# EUROPEAN PATENT SPECIFICATION

(11) **EP 0 441 982 B1**
(45) Date of publication and mention of the grant of the patent: **20.12.1995**
(21) Application number: 90912961.1
(22) Date of filing: 04.09.1990
(51) Int. Cl.: B29C 63/36, B29L 23/22

(54) **CONSTRUCTION METHOD OF REVERSAL TUBE LINING ON CONDUIT WITHOUT EXCAVATION**
VERFAHREN ZUR ROHRAUSKLEIDUNG DURCH UMSTÜLPEN OHNE BAUGRUBE
PROCEDE DE FABRICATION DE DOUBLURE DE CONDUIT A PARTIR D'UN TUYAU INVERSE SANS EXCAVATION

(30) Priority: 05.09.1989 JP 230879/89
(43) Date of publication of application: 21.08.1991
(73) Proprietor: TOKYO GAS CO., LTD., Minato-ku Tokyo 105 (JP)
(72) Inventor: IMAMURA, Minoru, Yokohama-shi Kanagawa 221 (JP); KOBAYASHI, Hiroaki, Tokyo 158 (JP); TOYODA, Shigeru, Saitama 366 (JP); IKEDA, Seiichi, Kawasaki-shi Kanagawa 213 (JP)
(74) Representative: King, James Bertram
(86) International application number: PCT/JP90/01123
(87) International publication number: WO 91/03369

(56) References cited:
- EP-A- 0 228 998
- WO-A-88/01707
- GB-A- 2 218 490
- JP-A-60 141 527
- JP-A-62 149 420
- PATENT ABSTRACTS OF JAPAN vol. 13, no. 94 (M-804)(3442) March 6, 1989 & JP-A-63 286 326 (TOUBU KURIINAA SERVICE K.K.) November 24, 1988

## Description

This invention relates to the repair of underground pipelines using a method whereby a lining tube is inserted into a pipe and thereafter reversed using fluid pressure whereby the liner closely adheres to the internal surface of the pipe. This invention is thus applicable to gas or water pipelines which are buried underground and enables such pipes to be lined from a single location without digging up the pipeline which is to be repaired.

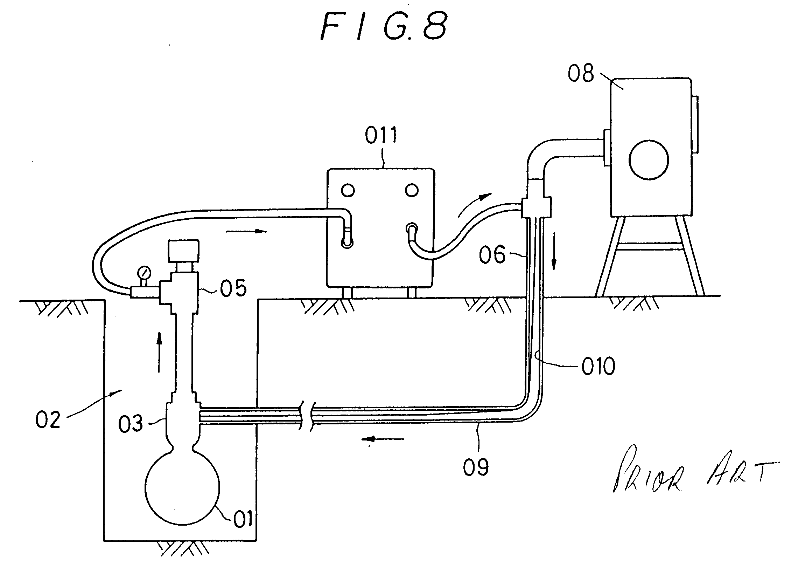

A prior art method of lining pipes is described in conjunction with Figure 8 of the accompanying drawings wherein an excavation 02 is made to expose the branch section of a main pipeline 01 to gain access to the service tee 03. A branch pipeline 09 is attached to the service tee 03 and through this branch line a lining tube 010 is fed using a machine 08 which is attached to the riser pipe 06 above the ground level. The end of the lining tube 010 is closed and once the tube has reached the service tee 03 the end is cut and installed on to the tee by means of a machine 05. A heating means 011 is connected to the machine 05 and to the riser pipe 06 and this machine circulates hot water in the direction shown by the arrows into the lining tube 010 so as to harden the thermosetting adhesive agent which is provided around the lining tube so as to secure the tube to the internal surface of the pipe 09.

This prior art method requires an excavation 02 to be made to expose the main pipe 01 resulting in labour and expense and the necessity to back fill and make good the surface. There is also the problem of traffic disruption where the main pipe is in a street.

In Japanese patent application JP-A-63 286326 there is disclosed an arrangement for lining a branch pipe wherein a liner bag or tube (1) is formed by a tubular liner (3) coated with a resin material (2), the liner bag comprising the liner (3) which is impregnated with the thermosetting resin film (2). This assembly is then passed through the guide pipe (8) into which hot water is poured through the hose (10). The end part (1a) of the water is poured through the hose (10). The end part (1a) of the liner (1) is extended past the pipe opening (11) and is caused to distend the elastic cap (6) connected with the end part (1a) of the liner bag. After completion of the operation, the elastic cap (6) is removed together with the hot water hose (5).

By contrast, the present invention uses a second lining tube with the water pipe being inserted into this tube. In this operation the advantage is that hot water does not come into contact with the adhesive coated or impregnated tube which forms the actual liner after installation.

In this invention the method of lining a pipe does not require excavation where the pipe joins the main pipeline (Japanese Application 147549 - 1988).

According to this invention there is provided a method for lining an underground pipeline, wherein a lining tube is inserted into the end of the pipeline by a reversing operation whereby the tube is turned inside out as it progresses into the interior of the pipeline with the surface of the tube adjacent the internal surface of the pipeline being coated with a thermosetting adhesive material, the remote end of the adhesive coated lining tube being closed off, hot water being passed through the interior of the lining tube to set the adhesive material to bond the lining tube to the pipeline, characterised by:
a) a second lining tube being inserted into the lining tube the remote end of said tube being closed off,
b) a water pipe being inserted into the second lining tube up to the remote end,
c) hot water being passed into the second lining tube and withdrawn through the water pipe, the hot water serving to cure the thermosetting adhesive,
d) the water pipe and second lining tube being withdrawn,
e) the remote end of the lining tube being cut open.

Preferably the closed remote end of the lining tube is connected with a draw-line to enable the tube end to be positioned accurately and retained.

Advantageously, the method is applied for lining a branch pipe connected to a main pipe through a service tee by operating through the riser pipe portion of the pipe, characterised in that the distance to the service tee is measured by a probe, the lining tube being inserted into the pipe by a pushing rod up to the service tee with the closed off end of the lining tube drawn back and retained by a draw-line in such position.

The invention is further described and illustrated with reference to the accompanying drawings showing an example of the method according to this invention.

Referring to the drawings:
- Figure 1: shows diagrammatically the method of measuring the pipeline to be lined using a measuring coil,
- Figure 2: shows the pipeline with the lining tube reversed therein,
- Figure 3: shows the pipeline with lining tube and with a reversed pipeline forming the heating tube,
- Figure 4: shows the pipeline with a hot water hose inserted therein and the full length of the heating tube,
- Figure 5: shows the rewinding tape being severed using a fusion cutter,
- Figure 6: shows the remote end of the lining tube being fusion cut with the cutter,
- Figure 7: shows the pipeline with the completed lining tube in position, and
- Figure 8: shows schematically the prior art arrangement previously described.

The embodiment shown in the drawings relates to the lining of a supply pipe 4 which is connected to a service tee 2 provided on a main pipeline 1. The supply pipe 4 connects with a riser pipe 3 which, as is known, couples with a suitable supply metering device (not shown). As a first step the length of the pipe 4 up to the service tee 2 is measured by using a machine 5 coupled to the riser pipe 3. This machine is adapted to supply information on the kind and quantity of the surface and couplings along the length of the pipe in addition to the distance. For this purpose a sensor 6 is attached to the end of a measuring coil 7 which is extended from a suitable apparatus 5. Couplings and the like along the length of the pipe may be detected, for example using sound, and the feed of the coil 7 is stopped when the sensor 6 detects the service tee 2. The length of the pipe 4 can thus be measured from the length of coil 7 which has been inserted.

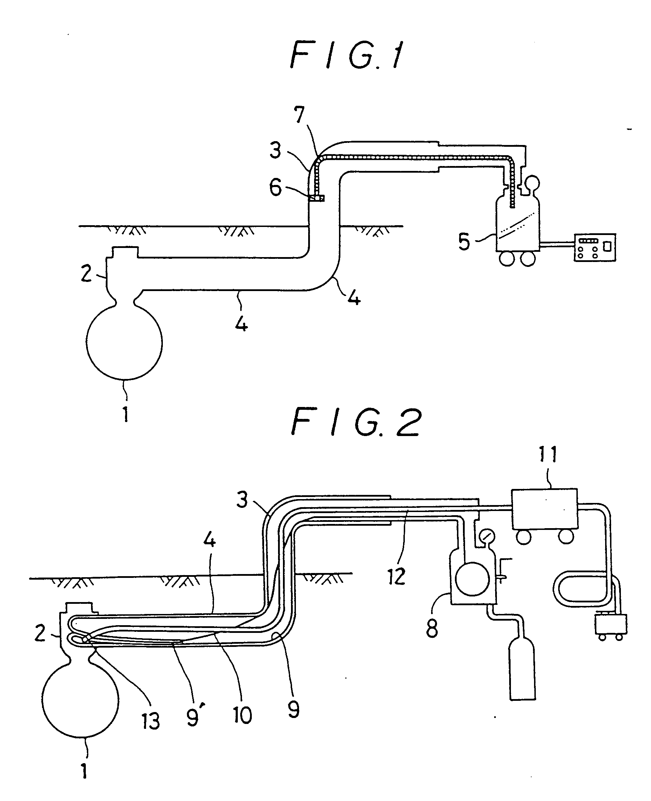

In the next step, as shown in Figure 2, a lining tube 9 which is coated with a thermosetting adhesive material is reverse entered from the riser pipe 3 using a suitable reversing machine 8. A lining tube rewinding tape 10 is attached to the lining tube 9 and the length of the lining tube inserted is made slightly longer than the distance to the tee 2. The lining tube 9 is inserted whilst being turned inside out or reversed using the machine 8 and by means of an introduction machine 11 which pushes the tube along the pipe by means of an introduction rod 12. The rod 12 pushes the tube by means of the tip 13 which serves as a directional guide and assists in the smooth advance of the lining tube within the pipe. The action terminates when the rod reaches the inside of the service tee 2.

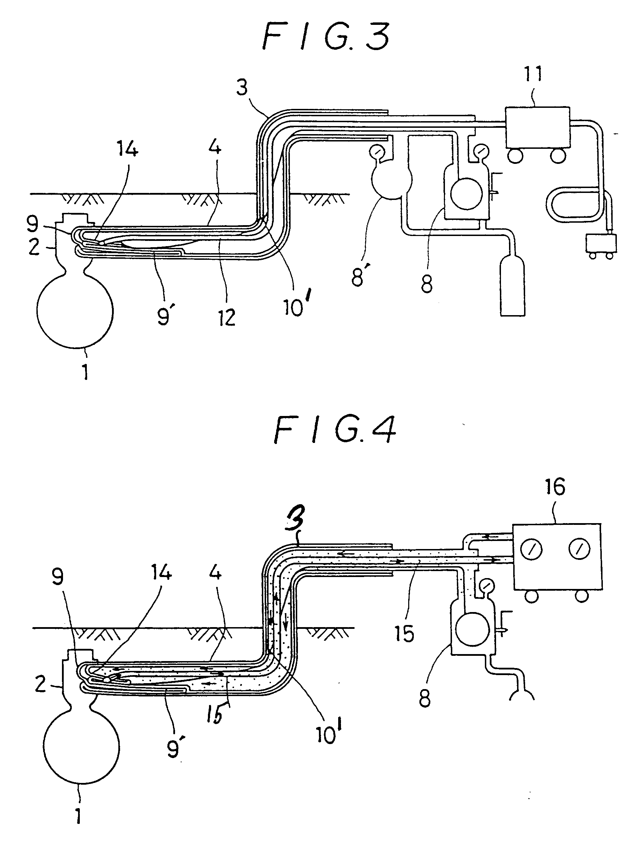

In the next step, as shown in Figure 3, a heating tube 14 is fed into the lining tube 9 by a similar method of reversing or turning the tube inside out. The heating tube 14 has no adhesive but does include a pulling-back tape 10'.

The next step, as shown in Figure 4, is to insert a hot water hose 15 into the heating tube 14 with the hose 15 connected to a hot water heating apparatus 16. Hot water is caused to flow through the heating tube 14 to the remote end and to flow back along the hose 15. The circulating hot water is at a temperature of about 70^{o}C. The hot water serves to harden the adhesive agent provided on the external surface of the lining tube 9 and as a result of this the tube 9 is intimately bonded to the whole internal surface of the pipe 4 from the tee 2 up to the riser pipe 3. A small part of the non-reversed section 9' of the lining tube 9 is left lying on the inside adjacent the service tee 2.

In the next step the hot water hose 15 is withdrawn and the rewinding tape 10' is pulled in order to withdraw the heating tube 14 from within the pipe 4.

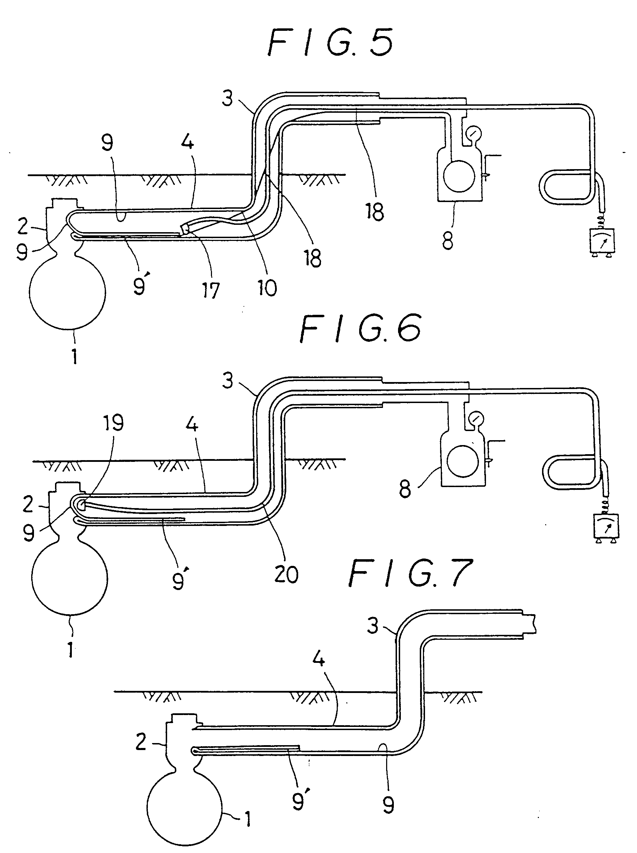

Referring now to Figure 5, the rewinding tape 10 which is attached to the end of the lining tube 9 is passed through an annular electrically heated cutter 17 which is then passed down the tape 10 with the cutter connected to a cable rod 18 which is stopped at the non-reversed portion 9' of the liner tube. The cutter 17 is then energised and severs the rewinding tape 10 which may be extracted from the tube along with the rod and heater 17,18.

Following this operation, and as shown in Figure 6, a further fusion cutting rod 20 with an electrical heater element at the tip is inserted until it abuts against the end of the lining tube 9 whereupon the cutter is energised to open up an aperture in the end of the lining tube 9. This then establishes communication between the service tee 2 and the branch pipe 4. The rod 20 is thereafter removed from the tube.

Finally, Figure 7 shows the completed lining after the cutting operation has been completed.

Because the whole of the operation can be effected from above ground and through the riser pipe the present invention provides advantages as follows.
a) It is not necessary to excavate around the main pipe to expose the service tee, thus expense involved in digging and back filling and making good can be avoided.
b) Because the lining tube is accurately extended to the location of the service tee, it will not pass into the main pipe and will therefore not cause an obstruction to the main pipe flow. Thus the main pipe is not obstructed should any maintenance work become necessary after the lining operation.
c) It is a simple matter to accurately position the lining pipe using the measuring and sensing operation which speeds up the operation and improves efficiency.
d) The cutting device comes into abutment with the unreversed section of the lining pipe and hence the position of the cutting can be accurately located.

## Claims

1. Method for lining an underground pipeline (4), wherein a lining tube (9) is inserted into the end of the pipeline (4) by a reversing operation whereby the tube (9) is turned inside out as it progresses into the interior of the pipeline (4) with the surface of the tube adjacent the internal surface of the pipeline being coated with a thermosetting adhesive material, the remote end (9') of the adhesive coated lining tube (9) being closed off, hot water being passed through the interior of the lining tube (9) to set the adhesive material to bond the lining tube (9) to the pipeline (4), characterised by:
a) a second lining tube (14) being inserted into the lining tube (9) the remote end of said tube being closed off,
b) a water pipe (15) being inserted into the second lining tube (14) up to the remote end,
c) hot water being passed into the second lining tube (14) and withdrawn through the water pipe (15), the hot water serving to cure the thermosetting adhesive,
d) the water pipe (15) and second lining tube (14) being withdrawn,
e) the remote end of the lining tube (9) being cut open.

2. Method in accordance with Claim 1, characterised in that the closed remote end (9') of the lining tube (9) is connected with a draw-line (10) to enable the tube end to be positioned accurately and retained.

3. Method in accordance with Claim 1 or 2, characterised in that the closed remote end of the lining tube (14) may be connected with a draw-line (10') to enable the tube to be withdrawn.

4. Method in accordance with Claim 1, 2 or 3, characterised in that an electrically heated cutting device (19) is inserted into the lining tube (9) using a rod (20).

5. Method in accordance with any preceding claim for lining a branch pipe (4) connected to a main pipe (1) through a service tee (2) by operating through the riser pipe portion (3) of the pipe (4), characterised in that the distance to the service tee (2) is measured by a probe (6,7) the lining tube (9) being inserted into the pipe (4) by a pushing rod (12) up to the service tee (2) with the closed off end (9') of the lining tube (9) drawn back and retained by a draw-line (10) in such position.

6. Method in accordance with any preceding Claim 2 to 5, characterised in that a probe (12,13) is inserted into the adhesive coated lining tube (9) and/or the second lining tube (14) , the probe detecting the end of the pipe (3), the lining tube (9) and/or the second lining tube (14) being pulled back against the probe by means of a draw line (10,10') to accurately position the end (9').

7. Method in accordance with any preceding claims characterised in that the remote end (9') of the lining tube (9) remains unreversed and lies within the lining tube.

8. Method in accordance with any preceding claim characterised in that the remote end of the second lining tube (14) remains unreversed and lies within the lining tube.

## Patentansprüche

1. Verfahren zur Auskleidung einer unterirdischen Rohrleitung (4), bei dem ein Auskleiderohr (9) durch eine Umkehroperation in das Ende der Rohrleitung (4) eingeführt wird, was zur Folge hat, daß das Rohr (9), indem es in das Innere der Rohrleitung (4) eindringt, umgestülpt wird, wobei die an die innere Oberfläche der Rohrleitung anschließende Oberfläche des Rohres mit einem hitzehärtbaren Klebstoff beschichtet wird, das entfernte Ende (9') des mit Klebstoff beschichteten Auskleiderohrs (9) abgeschlossen wird und heißes Wasser durch das Innere des Auskleiderohrs (9) geleitet wird, um zwecks Bindung des Auskleiderohrs (9) mit der Rohrleitung (4) Aushärten des Klebstoffs zu bewirken, dadurch gekennzeichnet,
a) daß ein zweites Auskleiderohr (14) in das Auskleiderohr (9) eingeführt wird, wobei das entfernte Ende des besagten Rohrs abgeschlossen wird,
b) daß ein Wasserrohr (15) bis zu dem entfernten Ende in das zweite Auskleiderohr (14) eingeführt wird,
c) daß heißes Wasser in das zweite Auskleiderohr (14) geleitet und durch das Wasserrohr (15) hindurch entzogen wird, wobei das heiße Wasser zum Aushärten des hitzehärtbaren Klebstoffs dient,
d) daß das Wasserrohr (15) und das zweite Auskleiderohr (14) herausgezogen werden,
e) daß das entfernte Ende des Auskleiderohrs (9) aufgeschnitten wird.

2. Verfahren nach Anspruch 1, dadurch gekennzeichnet, daß das abgeschlossene entfernte Ende (9') des Auskleiderohrs (9) mit einer Zugleine (10) verbunden ist, so daß das Rohrende genau positioniert und festgehalten werden kann.

3. Verfahren nach Anspruch 1 oder 2, dadurch gekennzeichnet, daß das abgeschlossene entfernte Ende des Auskleiderohrs (14) mit einer Zugleine (10') verbunden werden kann, um Herausziehen des Rohres zu ermöglichen.

4. Verfahren nach Anspruch 1, 2 oder 3, dadurch gekennzeichnet, daß eine elektrisch erhitzte Schneidvorrichtung (19) mit Hilfe einer Stange (20) in das Auskleiderohr (9) eingeführt wird.

5. Verfahren nach einem der vorstehenden Ansprüche zum Auskleiden eines über ein Betriebs-T-Stück (2) mit einem Hauptrohr (1) in Verbindung stehenden Zweigrohrs (4), indem durch den Steigrohrabschnitt (3) des Rohres (4) hindurch gearbeitet wird, dadurch gekennzeichnet, daß der Abstand von dem Betriebs-T-Stück (2) durch eine Sonde (6, 7) gemessen wird, und zwar wird das Auskleiderohr (9) mit Hilfe einer Schubstange (12) bis an das Betriebs-T-Stück (2) in das Rohr (4) eingeschoben, während das abgeschlossene Ende (9') des Auskleiderohrs (9) mit Hilfe einer Zugleine (10) zurückgezogen und in dieser Lage festgehalten wird.

6. Verfahren nach einem der vorstehenden Ansprüche 2 bis 5, dadurch gekennzeichnet, daß eine Sonde (12, 13) in das mit Klebstoff beschichtete Auskleiderohr (9) und/oder das zweite Auskleiderohr (14) eingeführt wird, wobei die Sonde feststellt, wo das Rohr (3) endet, und zwar wird/werden das Auskleiderohr (9) und/oder das zweite Auskleiderohr (14) zwecks genauen Positionierens des Endes (9') mit Hilfe einer Zugleine (10, 10') gegen die Sonde zurückgezogen.

7. Verfahren nach einem der vorstehenden Ansprüche, dadurch gekennzeichnet, daß das entfernte Ende (9') des Auskleiderohrs (9) nicht umgekehrt wird und daß es innerhalb des Auskleiderohrs liegt.

8. Verfahren nach einem der vorstehenden Ansprüche, dadurch gekennzeichnet, daß das entfernte Ende des zweiten Auskleiderohrs (14) nicht umgekehrt wird und daß es innerhalb des Auskleiderohrs liegt.

## Revendications

1. Procédé de doublage d'une canalisation souterraine (4) dans lequel un tube de doublage (9) est introduit dans l'extrémité de la canalisation (4) par une opération d'inversion dans laquelle le tube (9) est retourné tandis qu'il progresse à l'intérieur de la canalisation (4), la surface du tube adjacente à la surface intérieure de la canalisation étant enduite d'un matériau adhésif thermodurcissable, l'extrémité éloignée (9') du tube de doublage enduit d'adhésif (9) étant obturée, de l'eau chaude étant introduit à l'intérieur du tube de doublage (9) pour durcir le matériau adhésif afin de coller le tube de doublage (9) à la canalisation (4), caractérisé par :
a) l'introduction d'un deuxième tube de doublage (14) dans le tube de doublage (9), l'extrémité éloignée dudit tube étant obturée,
b) l'introduction d'un tuyau d'eau (15) dans le deuxième tube de doublage (14) jusqu'à l'extrémité éloignée,
c) l'introduction d'eau chaude dans le deuxième tube de doublage (14) et son retrait par le tuyau d'eau (15), l'eau chaude servant à durcir l'adhésif thermodurcissable,
d) le retrait du tuyau d'eau (15) et du deuxième tube de doublage (14),
e) l'ouverture de l'extrémité éloignée du tube de doublage (9).

2. Procédé selon la Revendication 1, caractérisé en ce que l'extrémité éloignée fermée (9') du tube de doublage (9) est reliée à une ligne de tirage (10) pour permettre à l'extrémité du tube d'être positionnée avec précision et maintenue.

3. Procédé selon la Revendication 1 ou 2, caractérisé en ce que l'extrémité éloignée fermée du tube de doublage (14) peut être reliée à une ligne de tirage (10') pour permettre le retrait du tube.

4. Procédé selon la Revendication 1, 2 ou 3, caractérisé en ce qu'un dispositif de découpage à chauffage électrique (19) est introduit dans le tube de doublage (9) au moyen d'une tige (20).

5. Procédé selon l'une quelconque des revendications précédentes pour doubler un tuyau d'embranchement (4) relié à un tuyau principal (1) en passant par un raccord de service en T (2) et par la partie montante (3) du tuyau (4), caractérisé en ce que la distance au T de service (2) est mesurée par une sonde (6,7), le tube de doublage (9) étant introduit dans le tuyau (4) par une tige de poussée (12) jusqu'au T de service (2), l'extrémité fermée (9') du tube de doublage (9) étant tirée en arrière et retenue dans cette position par une ligne de tirage (10).

6. Procédé selon l'une quelconque des revendications précédentes 2 à 5, caractérisé en ce qu'une sonde (12, 13) est introduite dans le tube de doublage (9) enduit d'adhésif et/ou le deuxième tube de doublage (14), la sonde détectant l'extrémité du tuyau (3), le tube de doublage (9) et/ou le deuxième tube de doublage (14) étant tirés contre la sonde au moyen d'une ligne de tirage (10,10') pour positionner l'extrémité (9') avec précision.

7. Procédé selon l'une quelconque des revendications précédentes caractérisé en ce que l'extrémité éloignée (9') du tube de doublage (9) reste non retournée et demeure à l'intérieur du tube de doublage.

8. Procédé selon l'une quelconque des revendications précédentes, caractérisé en ce que l'extrémité éloignée du deuxième tube de doublage (14) reste non retournée et demeure à l'intérieur du tube de doublage.
